Europäisches Patentamt

European Patent Office

Office européen des brevets

(11) Veröffentlichungsnummer: **0 187 973**
**A2**

(12) **EUROPÄISCHE PATENTANMELDUNG**

(21) Anmeldenummer: 85116058.0

(22) Anmeldetag: 17.12.85

(51) Int. Cl.⁴: **H04N 7/167**

(30) Priorität: 16.01.85 DE 3501178

(43) Veröffentlichungstag der Anmeldung:
23.07.86 Patentblatt 86/30

(84) Benannte Vertragsstaaten:
AT BE DE FR GB IT NL SE

(71) Anmelder: Blaupunkt-Werke GmbH
Robert-Bosch-Strasse 200
D-3200 Hildesheim(DE)

(72) Erfinder: Noetzel, Günter, Dipl.-Ing.
Trockener Kamp 31.
D-3200 Hildesheim(DE)

(74) Vertreter: Eilers, Norbert, Dipl.-Phys.
Blaupunkt-Werke GmbH Robert-Bosch-Strasse 200
D-3200 Hildesheim(DE)

(54) Verfahren und Schaltungsanordnung zur Verhinderung des unberechtigten Empfangs verschlüsselter Fernsehsignale.

(57) Bei einem Verfahren zur Verhinderung des unbefugten Empfangs verschlüsselter Fernsehsignale, bei dem in einer Sendezentrale die Fernsehsignale nach einem zeitlich veränderlichen Algorithmus verschlüsselt werden, der im wesentlichen in den Entschlüsselungsgeräten, welche befugten Teilnehmern zugeordnet sind, abgespeichert ist und dort zur Entschlüsselung abgerufen werden kann, wird den befugten Teilnehmern eine Adresse zugeteilt, welche sowohl in der Sendezentrale als auch in dem Entschlüsselungsgerät des Teilnehmers jeweils in einem Speicher abgelegt wird. Mit der späteren Aussendung der Adresse zusammen mit den verschlüsselten Fernsehsignalen wird eine Zusatzinformation über die zeitliche Veränderung des Algorithmus mitgeteilt.

Verfahren und Schaltungsanordnung zur Verhinderung des unberechtigten Empfangs verschlüsselter Fernseh-signale.

Die Erfindung geht aus von einem Verfahren nach der Gattung des Hauptanspruchs.

Bei herkömmlichen Fernseh-Rundfunksystemen, sei es bei der Ausbreitung der Signale durch abgestrahlte Wellen oder mit Hilfe von Kabelsystemen, kann jeder Teilnehmer, der über eine geeignete Empfangseinrichtung verfügt alle abgestrahlten Sendungen empfangen.

Beim Betrieb von Kabelfernsehnetzen entstand allerdings der Bedarf, den Empfang bestimmter Programme durch den einzelnen Teilnehmer nur zu ermöglichen, wenn er beispielsweise zur Zahlung eines zusätzlichen Entgelts bereit ist. Diese Form des Betriebs von Fernsehkabelnetzen hat sich zuerst in den USA durchgesetzt und wird dort Pay-TV genannt.

Um zu verhindern, daß Unberechtigte diese besonderen Programme empfangen, werden die entsprechenden Fernsehsignale verschlüsselt, so daß sie nur von Teilnehmern, die eine entsprechende Entschlüsselungseinrichtung besitzen, empfangen werden können - und zwar nur dann, wenn die Entschlüsselungseinrichtung aktiviert ist. Letzteres ist nur dann möglich, wenn eine Zahlung des zusätzlichen Entgeltes sichergestellt ist.

Dabei ist der Algorithmus einer konstanten Verschlüsselung oder einer sich nach einem ständig wiederholenden Muster veränderbaren Verschlüsselung relativ leicht herauszufinden und damit auch ohne Berechtigung zu entschlüsseln.

Aufgabe der vorliegenden Erfindung ist es, ein Verfahren anzugeben, bei welchem der unbefugte Empfang von verschlüsselten Fernsehsignalen verhindert wird.

Das erfindungsgemäße Verfahren mit den kennzeichnenden Merkmalen des Hauptanspruchs hat den Vorteil, daß mit vertretbarem Aufwand eine unbefugte Enschlüsselung von verschlüsselten Fernsehsignalen praktisch unmöglich gemacht wird. Ein weiterer Vorteil besteht darin, daß die Entschlüsselungseinrichtung - welche sich voraussetzungsgemäß beim Teilnehmer befindet - vom Sender aus gesteuert werden kann, so daß beispielsweise ein gestohlenes Gerät oder ein Gerät, welches sich nach Ablauf des Teilnehmervertrages noch im Besitz des früheren Teilnehmers befindet, nicht in unbefugter Weise zur Entschlüsselung herangezogen werden kann.

In den Unteransprüchen sind weitere Verbesserungen des erfindungsgemäßen Verfahrens und Anordnungen zur Durchführung des erfindungsgemäßen Verfahrens angegeben.

Ausführungsbeispiele der Erfindung sind in der Zeichnung an Hand mehrerer Figuren dargestellt und in der nachfolgenden Beschreibung näher erläutert. Es zeigen jeweils als Blockschaltbild:

Fig. 1 eine senderseitige Einrichtung ,

Fig. 2 eine Teilnehmereinrichtung und

Fig. 3 Zeitdiagramme zur Veranschaulichung der Vorgänge.

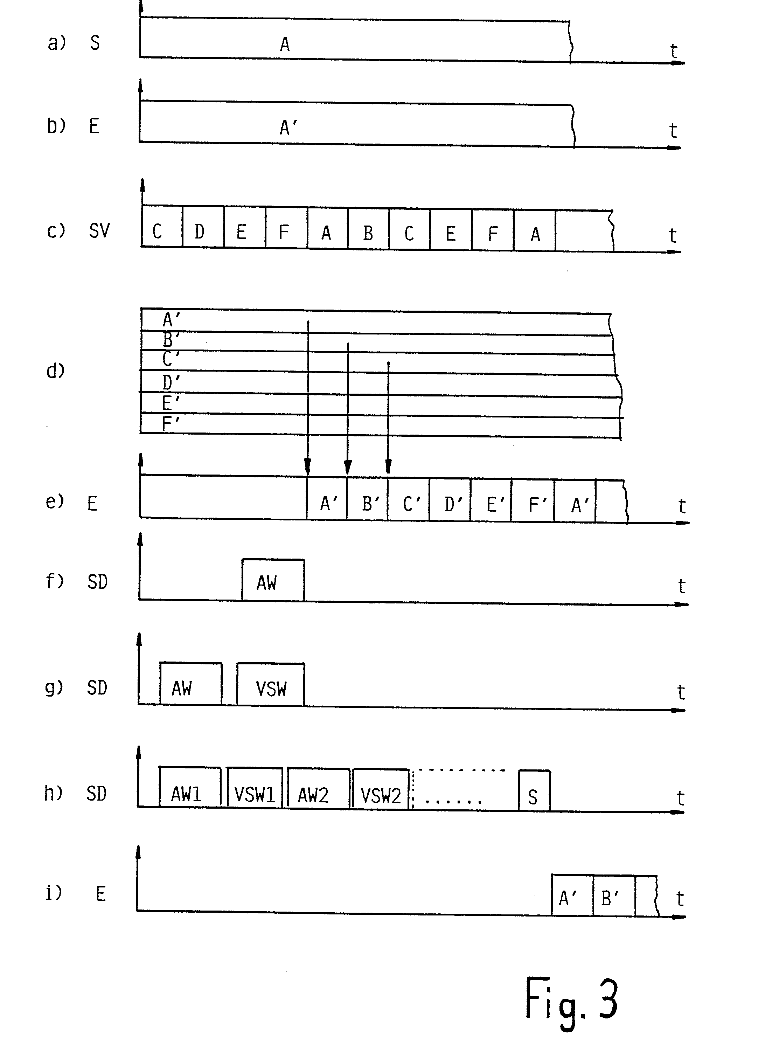

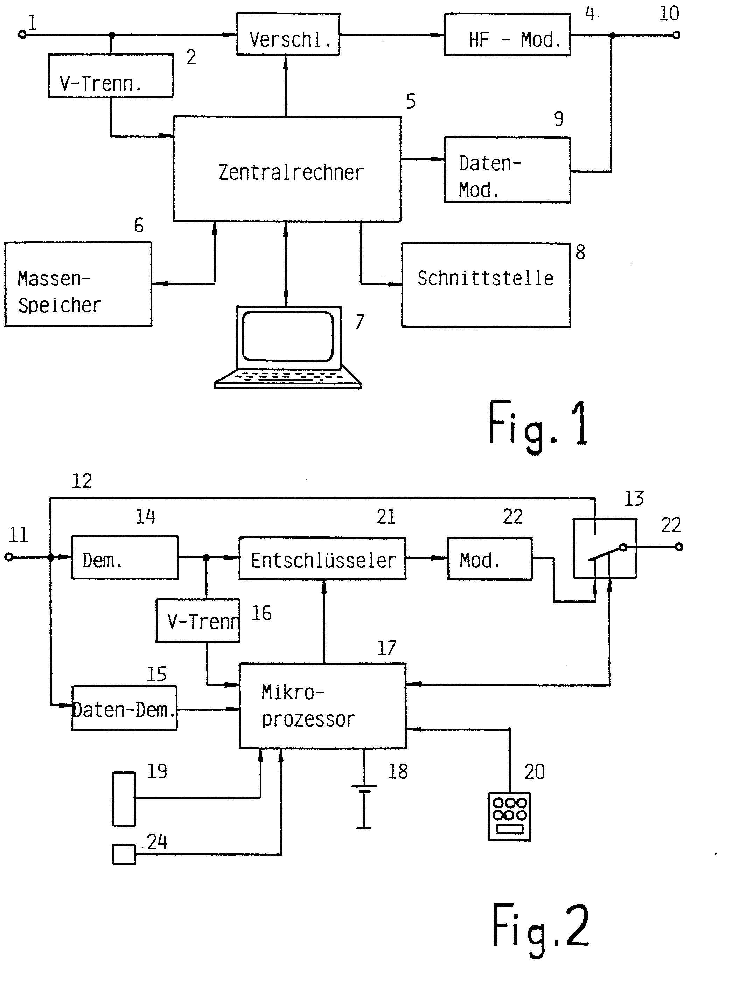

Der Anordnung nach Fig. 1 werden bei 1 die zu verschlüsselnden Fernsehsignale zugeführt. Nach der Verschlüsselung in einem Verschlüsseler 3 werden sie im HF-Modulator 4 auf einen geeigneten Träger moduliert und über den Ausgang 10 der Anordnung nach Fig. 1 dem Kabelnetz zugeführt.

Der Verschlüsseler 3 kann nach einem an sich bekannten Verfahren arbeiten, beispielsweise können nach einer Pseudo-Zufallsfolge Synchronimpulse unterdrückt werden, die Signalwerte zeitweilig invertiert werden oder einzelne Signalabschnitte (beispielsweise Zeilen oder Gruppen von Bildpunkten) zeitlich miteinander vertauscht werden. Insbesondere bei der Verwendung von digitalen Schaltungsmitteln sind sehr viele Algorithmen bekannt, welche zur Verschlüsselung und im umgekehrten Sinne beim Teilnehmer zur Entschlüsselung angewendet werden können. Diese bekannten Verschlüsselungsverfahren setzen voraus, daß der jeweils zur Entschlüsselung anwendbare Algorithmus bei dem betreffenden Teilnehmer bekannt ist, d. h. in der Empfangseinrichtung gespeichert ist. Dieses führt jedoch leicht dazu, daß der Algorithmus unbefugterweise ermittelt wird und dann unbefugter Empfang möglich ist. Bei dem erfindungsgemäßen Verfahren genügt nun die in der Teilnehmereinrichtung gespeicherte Information nicht zur Entschlüsselung der Fernsehsignale aus. Wie im folgenden beschrieben, wird erst durch eine von der Sendezentrale zusätzlich zu übertragenden Information die Teilnehmereinrichtung in die Lage versetzt, die Fernsehsignale zu entschlüsseln.

Den bei 1 zugeführten zu verschlüsselnden Fernsehsignalen wird mit Hilfe einer Impulsabtrennschaltung 2, welche in an sich bekannterweise aus einem Amplitudensieb und einer H/V-Trennstufe besteht, der V-Impuls entnommen. Dieser wird zu Synchronisierzwecken dem Zentralrechner 5 zugeführt. Der Zentralrechner 5 ist mit dem Verschlüsseler 3 verbunden und gibt somit dem Verschlüsseler 3 Anweisungen zu welcher Zeit welcher Algorithmus anzuwenden ist.

Ferner ist der Zentralrechner 5 mit einem Massenspeicher, beispielsweise einem Plattenspeicher, verbunden der zur Aufnahme verschiedener Daten, beispielsweise der später zu erläuternden Adreß- und Schutzworte dient. Über eine Ein- und Ausgabeeinrichtung 7, beispielsweise eine Tastatur mit einem Bildschirm, kann der Zentralrechner 5 bedient werden. Schließlich verfügt der Zentralrechner noch über eine Schnittstelle zum Anschluß des jeweils zu programmierenden Teilnehmergerätes.

Dem Teilnehmergerät nach Fig. 2 werden bei 11 die Fernsehsignale vom Kabelnetz zugeführt. Diese gelangen beim Empfang von unverschlüsselten Sendungen über die Leitung 12 und den Umschalter 13 zum Fernsehgerät 22.

Zum Empfang von verschlüsselten Fersehsignalen wird der Umschalter 13 vom Mikroprozessor 17 in die untere Stellung gebracht. Die verschlüsselten Fernsehsignale werden über einen Demodulator 14, einen Entschlüsseler 21 und einen HF-Modulator 22 geleitet. Der Entschlüsseler wird vom Mikroprozessor 17 gesteuert. Diesem wird über einen Demodulator 15, welcher zur Demodulation der dem Fersehsignal überlagerten Daten dient, zusätzliche Steuerinformation zugeführt. Ein Dateneingang 19 ist ferner vorgesehen, um in den Mikroprozessor vor der erstmaligen Verwendung die jeweils für den Teilnehmer individuellen Daten einzugeben. Schließlich ist noch eine Eingabeeinrichtung 20 zur Programmwahl vorgesehen und eine Pufferbatterie, damit der Mikroprozessor 17 die Speicherung der Daten aufrecht erhält, wenn die Stromzufuhr vom Netz unterbrochen ist.

Im folgenden wird an Hand der in Fig. 3 dargestellten Diagramme die Funktion der Anordnungen nach Fig. 1 und Fig. 2 erläutert. In Fig. 3 bedeutet S, daß ein Signal vom Sender stammt, wobei SV auf das Fernsehsignal und SD auf ein parallel dazu übertragenes Datensignal hinweist. Mit E sind Signale gekennzeichnet, die im Entschlüsse ungsgerät erzeugt werden.

In Zeilen a) und b) sind jedoch schematisch Vorgänge bei der Verschlüsselung und Entschlüsselung von Signalen mit einem gleichbleibenden Algorithmus dargestellt. Ein Algorithmus A dient zeitunabhängig zur Verschlüsselung eines von einem Sender abgegebenen Signals S. Dabei kann es sich durchaus um einen periodisch veränderbaren Algorithmus handeln, dieser ist jedoch beispielsweise mit den V-Impulsen des Fernsehsignales verkoppelt. Auf der in Zeile b) dargestellten Seite des Entschlüsselers ist ständig der zur Entschlüsselung erforderliche Algorithmus A´ gespeichert. Einer weiteren Informationsübertragung bedarf es nicht außer einer Synchronisierung im Falle eines periodisch veränderlichen Algorithmus, die mit Hilfe der Synchronimpulse des Fernsehsignals leicht durchzuführen ist. Wie bereits oben erwähnt, kann ein unbefugter Empfang erfolgen, wenn der Algorithmus A bekannt geworden ist.

Bei dem erfindungsgemäßen Verfahren wird doch ein ständig wechselnder Algorithmus verwendet, was schematisch für die vom Sender abgegebenen Fernsehsignale SV in Zeile c) dargestellt ist. Der Übersichtlichkeit halber wurden nur sechs verschiedene Algorithmen, nämlich A, B, C, D, E und F, dargestellt. In der Praxis wird diese Zahl wesentlich größer sein.

Mit Hilfe von Zeile d) wird gezeigt, daß im Speicher des Entschlüsselungsgerätes ständig alle zur Entschlüsselung erforderlichen Algorithmen A´ bis F´ gespeichert sind. Es ist jetzt Aufgabe des Mikroprozessors 17 - (Fig. 2) diese Entschlüsselungs-Algorithmen zum richtigen Zeitpunkt aus dem Speicher abzurufen und dem Entschlüsseler 21 zuzuführen. In Zeile e) ist das dem Entschlüsseler 21 zugeführte Signal E dargestellt.

Der Mikroprozessor 17 benötigt jedoch eine Information darüber, welcher Entschlüsselungs-Algorithmus wann dem EntschlüsseLer zugeleitet werden soll. Mit anderen Worten: Dem Mikroprozessor ist eine Startadresse mitzuteilen.

Bevor die Vorgänge bei der Entschlüsselung weiter erläutert werden, wird im folgenden kurz beschrieben, wie ein Entschlüsselungsgerät zum Einsatz in einer Teilnehmereinrichtung vorbereitet wird. Hierzu wird es mit dem Dateneingang 19 (Fig. 2) an die Schnittstelle 8 des Zentralrechners 5 (Fig. 1) angeschlossen. In den Zentralrechner 5 werden wie bei der Neuaufnahme eines Abonennten bzw. Teilnehmers üblich, verschiedene Daten wie beispielsweise Name, Adresse, Zahlungsweise, Bankverbindung usw. eingegeben. Der Zentralrechner ermittelt nun mit Hilfe eines Zufallgenerators eine Adresse und ein Schutzwort für das Entschlüsselungsgerät. Nach einer Prüfung, ob diese Wörter bereits vergeben sind, werden sie sowohl im Entschlüsselungsgerät als auch im Massenspeicher 6 des Zentralrechners 5 abgelegt. Danach kann das Entschlüsselungsgerät vom Zentralrechner getrennt und bei dem Teilnehmer installiert werden.

Das Entschlüsselungsgerät kann mit Hilfe der über das Kabelnetz zusammen mit den verschlüsselten Fernsehsignalen ausgesendeten Steuerinformation, welche über den Modulator 15 dem Mikroprozessor zugeführt wird, nur angesprochen werden, wenn sein individuelles Adreßwort gesendet wird. Im folgenden sind zwei Ausführungsformen des erfindungsgemäßen Verfahrens beschrieben und zwar eine, bei dem die Entschlüsselungsgeräte nur mit dem jeweiligen Adreßwort gesteuert werden und eine zweite, bei welchem zusätzlich noch ein verschlüsseltes Startwort verwendet wird.

Bei den Verfahren, bei dem lediglich je Entschlüsselungsgerät ein Adreßwort verwendet wird, kann bei der Neuaufnahme des Teilnehmers die Vergabe eines Schutzwortes entfallen. Der Zentralrechner 5 ermittelt lediglich ein Adreßwort. Die Information über die Startadresse liegt bei dieser Ausführungsform in dem Zeitpunkt, zu welchem das Adreßwort gesendet wird. So ist in Zeile f) der Fig. 3 ein über den Datenkanal übertragenes Signal SD dargestellt, welches aus einem Adreßwort besteht und einer der Entschlüsselungseinrichtungen mitteilt, daß sofort nach dem Empfang des Adreßwortes bzw. dessen Erkennung durch Mikroprozessor 17 in verabredeter Weise Entschlüsselungs-Algorithmen an den Entschlüsseler 21 zu geben sind. Im vorliegenden Beispiel müßte senderseitig dafür gesorgt werden, daß die Entschlüsselungseinrichtung das Adreßwort AW kurz vor Beginn der Verschlüsselung durch den Algorithmus A (Zeile c) gesendet wird, worauf der Mikroprozessor die in Zeile e) dargestellten Algorithmen an den Entschlüsseler 21 abgibt.

Da für alle Teilnehmer gleiche Signale SV und SD verteilt werden, müßte genügend lange vor Beginn eines Programmbeitrags mit der Aussendung der Adreßworte begonnen werden, damit alle angeschlossenen Entschlüsselungsgeräte richtig gestartet werden können.

Bei der zweiten Ausführungsform wird außer dem Adreßwort dem einzelnen Entschlüsselungsgerät noch ein verschlüsseltes Startwort VSW über den Datenkanal zugeführt. Dieses wird von dem Entschlüsselungsgerät nur verwertet, wenn vorausgehend das Adreßwort für das entsprechende Entschlüsselungsgerät gesendet wurde. Das verschlüsselte Startwort beinhaltet an sich eine für alle Entschlüsselungsgeräte gleiche Information, nämlich die für die Entschlüsselung zu verwendende Startadresse. Sie wird jedoch vom Zentralrechner 5 (Fig. 1) derart für jedes Entschlüsselungsgerät verschieden verschlüsselt, daß das Entschlüsselungsgerät mit Hilfe des bei der Neuaufnahme des Teilnehmers zusätzlich gespeicherten Schutzwortes die Startadresse ermitteln kann.

Wie im Zusammenhang mit der ersten Ausführungsform erläutert, kann nun vor dem Beginn eines Programmbeitrags jedes Entschlüsselungsgerät entsprechend angesteuert werden. In diesem Fall kann jedoch eine Änderung der Verschlüsselungsfolge nur bei genügend langen Programmpausèn stattfinden. Eine weitere Ausführungsform, welche mit Hilfe der Zeilen h) und i) der Fig. 3 erläutert wird, gestattet jedoch die Umstellung der Verschlüsselungsfolge während laufender Programmbeiträge. Hierbei werden wie in Zeile h) dargestellt sowohl Adreßwörter als auch verschlüsselte Startwörter vom Zentralrechner nacheinander allen Entschlüsselungsgeräten zugeführt. Diese speichern zunächst die empfangenen verschlüsselten Startwörter oder wandeln diese auch gegebenenfalls bereits in eine neue Startadresse um. Die zur Zeit laufende Zuordnung wird jedoch nicht geändert. Nachdem der Zentralrechner 5 alle Entschlüsselungsgeräte über den bevorstehenden Wechsel der Startadresse informiert hat, sendet er ein Startsignal S aus, welches von allen Entschlüsselungsgeräten empfangen werden kann, und ändert die Verschlüsselung der Fernsehsignale. Von diesem Zeitpunkt an wird unter Verwendung der neuen Startadresse der Entschlüsseler 21 vom Mikroprozessor 17 eines jeden Entschlüsselungsgerätes gesteuert. Wie in Zeile i) der Fig. 3 dargestellt, beginnt der Mikroprozessor direkt nach dem Empfang des Startsignals S mit der Ausgabe der Algorithmen A´, B´ usw. Es ist damit möglich während eines Programmbeitrags das Startwort zu ändern ohne daß bei den Teilnehmern Störungen sichtbar werden.

Zur weiteren Sicherheit kann eine Vorrichtung in den Entschlüsselungsgeräten vorgesehen werden, welche bei Öffnen des Gerätes die Adresse und gegebenenfalls das Schutzwort löscht. Diese Vorrichtung kann aus einem Schalter 24 bestehen, welcher mit einem Eingang des Mikroprozessors 17 verbunden ist, der wiederum entsprechend programmiert ist.

**Ansprüche**

1. Verfahren zur Verhinderung des unbefugten Empfangs verschlüsselter Fernsehsignale, wobei von einer Sendezentrale die Fernsehsignale nach einem zeitlich veränderlichen Algorithmus verschlüsselt werden, der im wesentlichen in den Entschlüsselungsgeräten, welche befugten Teilnehmern zugeordnet sind, abgespeichert ist und dort zur Entschlüsselung abgerufen werden kann, dadurch gekennzeichnet, daß den befugten Teilnehmern eine Adresse zugeteilt wird, welche sowohl in der Sendezentrale als auch in dem Entschlüsselungsgerät des Teilnehmers jeweils in einen Speicher abgelegt wird, und daß mit der späteren Aussendung der Adresse zusammen mit den verschlüsselten Fernsehsignalen eine Zusatzinformation über die zeitliche Veränderung des Algorithmus mitgeteilt wird.

2. Verfahren nach Anspruch 1, dadurch gekennzeichnet, daß die Zusatzinformation aus dem Zeitpunkt der Aussendung der Adresse in bezug auf die verschlüsselten Fernsehsignale besteht.

3. Verfahren nach Anspruch 1, dadurch gekennzeichnet, daß die Zusatzinformation aus einer für die einzelnen Entschlüsselungsgeräte verschieden verschlüsselten Nachricht besteht, und daß mit der Zuteilung der Adresse auch ein Code für Ver- bzw. die Entschlüsselung dieser Nachricht in den Speichern der Sendezentrale und des jeweiligen Entschlüsselungsgerätes abgelegt wird.

4. Verfahren nach Anspruch 3, dadurch gekennzeichnet, daß die Zusatzinformation eine Startadresse umfaßt, bei welcher die schrittweise Anwendung einer sowohl in der Sendezentrale als auch bei den Entschlüsselungsgeräten abgespeicherte Code-Tabelle begonnen wird.

5. Verfahren nach Anspruch 4, dadurch gekennzeichnet, daß jeweils vor Beginn eines Programmbeitrags eine neue Startadresse festgelegt und nacheinander den Entschlüsselungsgeräten mitgeteilt wird.

6. Verfahren nach Anspruch 4, dadurch gekennzeichnet, daß zu beliebigen Zeitpunkten Änderungen der Startadresse vorgenommen werden, daß den Entschlüsselungsgeräten rechtzeitig davor nacheinander die neue Startadresse mitgeteilt wird, und daß ein für alle Entschlüsselungsgeräte empfangbares Signal den Zeitpunkt der Änderung der Startadresse in den verschlüsselten Fernsehsignalen anzeigt.

7. Anordnung zur Durchführung des Verfahrens nach Anspruch 1, dadurch gekennzeichnet, daß in der Sendezentrale eine an sich bekannte Verschlüsselungseinrichtung (3) vorgesehen ist, daß ferner ein Rechner (5) zur Steuerung der Verschlüsselungseinrichtung, zur Festlegung der Adresse und der Zusatzinformation und zur Abgabe der Adresse und der Zusatzinformation vorgesehen ist.

8. Anordnung zur Durchführung des Verfahrens nach Anspruch 1, dadurch gekennzeichnet, daß ein einem Teilnehmer zugeordnetes Entschlüsselungsgerät einen an sich bekannten Entschlüsseler (21) enthält, dem einerseits die zu entschlüsselnden Fernsehsignale und andererseits von einem Mikroprozessor (17) ein Entschlüsselungsalgorithmus zuführbar sind, und daß der Mikroprozessor nur zur Aufnahme eines vorher eingegebenen Adreßwortes (AW) vorbereitet ist.

9. Anordnung zur Durchführung des Verfahrens nach Anspruch 1, dadurch gekennzeichnet, daß ein einem Teilnehmer zugeordnetes Entschlüsselungsgerät einen an sich bekannten Entschlüsseler (21) enthält, dem einerseits die zu entschlüsselnden Fernsehsignale und andererseits von einem Mikroprozessor (17) ein Entschlüsselungsalgorithmus zuführbar ist, und daß der Mikroprozessor (17) nur zur Aufnahme bzw. Verarbeitung von Daten vorbereitet ist, die ihm im Zusammenhang mit einem vorher eingegebenen Adreßwort zugeführt sind.

10. Anordnung nach Anspruch 8 oder 9, dadurch gekennzeichnet, daß eine Einrichtung (24) zur Löschung des Adreßwortes und gegebenenfalls des Schutzwortes bei unbefugtem Öffnen des Entschlüsselungsgeräts vorgesehen ist.

0 187 968

Fig. 3

0 187 968

Fig. 1

Fig. 2